# EUROPEAN PATENT APPLICATION

(11) **EP 1 825 970 A1**
(43) Date of publication of application: **29.08.2007**
(21) Application number: 06445005.9
(22) Date of filing: 24.02.2006
(51) Int. Cl.: B25J 19/00

(54) **Industrial robot with drive devices mounted on high thermal conductivity structural parts, and method of manufacturing such robot**

(71) Applicant: ABB AB, 721 83 Västerås (SE)
(72) Inventor: Bird-Radolovic, Ian, 722 23 Västeras (SE)
(74) Representative: Wennborg, Johan

(57) **Abstract**

Manipulators of industrial robots comprise a number robot parts (10,20,30,40a,40b,50a,50b) movable one in relation to the other and driving means comprising an electrical motor (22) for moving the members. For controlling and supplying electrical power to the motors, drive devices (24,24',24'',31,32,33) are provided. The invention suggests to mount such drive devices to structural parts made of a material of higher thermal conductivity than that of other structural parts of the robot.

## Description

### Field of the invention

The invention relates to an industrial robot comprising a manipulator and control means, such as drive devices, for power supply and control of said manipulator. The invention also relates to a method of manufacturing such an industrial robot.

### Background art

Industrial robots normally comprise a manipulator and control means for supplying electrical power to and controlling the movements of the manipulator. Examples of such industrial robots are the parallel kinematics type robots, the gantry robots and the arm type robots. Industrial robots may also be categorized by the number of degrees of freedom of the manipulator. An example of such an industrial robot is an arm type robot with six degrees of freedom. The manipulator of this type of robot comprises a number of members or robot parts that are movable, one in relation to the other. Typically these robot parts may comprise a foot, a stand or shoulder, a lower arm, an upper arm and a hand with two movable members. The stand is rotably arranged on the foot, which is fixed to a base. The stand supports a first lower robot arm, which is rotable in relation to the stand. At the outer end of the first arm, a second upper robot arm is rotably journalled. The outer part of the second arm is rotable, about a longitudinal axis, in relation to an inner part of the second arm. At its outer end, the second arm supports a manipulator hand. The manipulator hand is provided with a tool attachment and consists of two hand parts that allow the tool attachment to be rotable in two degrees of freedom relative to the second arm.

Each of these movable robot parts is formed of single or several structural parts. For most applications and especially for such manipulators and industrial robots that are produced and sold in large quantities there exists a need to keep the total cost for the manipulator as low as possible. For this reason, relatively inexpensive materials such as comparatively low cost steel are often used for forming the structural parts.

To achieve movement of the above-mentioned, shoulder, robot arms and hand parts, a drive means is arranged at each axis. Each such drive means comprises a motor, for example an inverter-fed synchronous motor with permanent rotor magnets and a reduction gear with high gear ratio.

Power supply and control of an industrial robot of the kind described above are provided through supply and control equipment comprising a rectifier and a drive device provided for each drive means. The rectifier converts a three-phase line voltage into a direct voltage, which is supplied to the drive devices. The drive devices are controlled by signals from the control equipment and thereby convert the direct current into a variable alternating current for driving the driving motors of the robot. The variable alternating current is preferably within the frequency range 0 - 400 Hz. The alternating current is created by chopping the direct current, thus producing a pulse train formed of pulses with a variable length and polarity, the purpose of this pulse train being to imitate a sinusoidal alternating current. Alternatively, the drive devices may comprise a matrix converter in which case the rectifiers may be omitted.

The drive system for the above-described type of manipulator with six degrees of freedom typically comprises six drive means, each comprising its own ac motor and its own reduction gear, which are placed on or in the manipulator. The motors are each connected, by means of long conductors, to a separate drive device disposed in a control cabinet. The drive devices, the task of which is to convert the direct current into a controllably variable alternating current, are supplied with direct current from a rectifier, common to all drive devices and placed in the control cabinet. The control and supply equipment including the rectifier and the drive devices is normally housed in a cabinet arranged outside the operating range of the manipulator. For driving the manipulator, a multiconductor cable, with a number of conductors necessary for each drive means, is provided between the control cabinet and the manipulator. The cable is connected to the foot of the manipulator and, from this point, branches out to the different drive means, which are usually placed on the stand and on the second arm. Each one of the six ac motors requires three conductors, which means that the cable comprises at least 18 conductors.

EP 0 728 559 B1 describes a development of the above described arrangement. According to EP 0 728 559 B1 at least one of the drive devices is arranged on the manipulator, to thereby reduce the need for long multiconductor cables between a separate cabinet and the manipulator.

US 2002/0014874 A1 proposes another development of the above-described arrangement. According to this document the drive devices are provided with individual cooling means and are mounted on the manipulator in such a manner that they are thermally insulated from the structural parts forming the robot part to which it is mounted.

In many applications for industrial robots, it is desirable to have two or more robots working together in a working group. Along with the development of such multi-robot applications, there has been an increased desire for simple and effective set-up and control for such multi-robot working groups.

### Summary of the invention

An object of the invention is to provide a further development of an industrial robot, such as a parallel kinematic robot, a gantry robot or an arm type robot. Another object is to provide such an industrial robot, which in a simple and cost efficient manner allows for arranging at least one drive device on the manipulator, even if the manipulator is of a comparatively inexpensive type, mainly constructed of comparatively low-cost materials.

These and other objects are achieved by an industrial robot of the kind described in the preamble of claim 1, which industrial robot is characterized by the features set out in the characterizing part of claim 1.

According to the invention the robot parts of the manipulator together comprise at least two different materials. A first of these material has a relatively low thermal conductivity and a second material has a relatively high thermal conductivity. I.e. the second material has a higher thermal conductivity than the first material. By higher thermal conductivity is meant that the second material has a higher coefficient of thermal conductivity than the first material. The robot parts of the manipulator are formed of structural parts. Each robot part may comprise one or several such structural parts. The structural parts comprise first structural parts and at least one second structural part. The first structural parts are formed of or comprise the first material. By the expression "formed of or comprise the first material" is meant that each first structural part is either entirely made of the first material or that it comprises one or several portions of the first material. The first structural part may also comprise portions of optional materials other than the first material. The second structural part is formed of or comprises the second material. By the expression "formed of or comprise the second material" is meant that each second structural part is either entirely made of the second material or that it comprises one or several portions of the second material. The second structural part may also comprise portions of optional materials other than the first material.

One or several drive devices is mounted to such a second structural part of the manipulator. The drive devices is mounted to the second structural part in such a manner that the drive device is in heat conductive contact with the second material comprised in or forming the second structural part.

By this means the heat generated by the drive device is efficiently conducted into and through the associated second structural part. The associated second structural part functions as a cooling means for the drive device and the heat generated by the drive device may be readily dissipated into the ambient air from the structural part. In this way the risk of overheating the drive devices is reduced. An essential advantage in relation to prior art arrangements is that the majority of the structural parts forming the manipulator may still be formed of conventional comparatively low-cost material, such as low-cost steel. Only the structural parts to which a drive device is mounted or even only some of these structural parts, need to comprise or be formed of a material with relatively higher thermal conductivity. This contributes to the possibility to allow mounting of drive devices on the manipulator to thereby dispense with separate control cabinets and long multiconductor cables also for comparatively inexpensive manipulators such as industrial robots that are produced and sold in large quantities.

It is understood that the drive devices may comprise an inverter or other electric component, which controls the drive means and which is connected to a rectifier. A separate rectifier may be connected to each drive device. Alternatively a common rectifier may be connected to several or all of the drive devices. The drive device may however also comprise a matrix converter, in which case the rectifier may be omitted.

The second structural part may be entirely formed of the second material. By this means the second structural part to which a drive device is mounted require, at least in some embodiments, very little or no re-design, except change of material, in relation to the corresponding structural part used in known manipulators. In fact, some of the structural parts to which a drive device is mounted may be manufactured by casting of e.g. aluminium in the same cast moulds that were previously used for casting the corresponding parts in steel. The only adoptions needed being to e.g. by drilling provide attachment holes for mounting the drive device by means of threaded bolts or the like.

Alternatively, the second structural part may be formed only partially of the second material. One or several drive devices are then mounted in heat conducting contact with that portion of the structural part, which portion is formed of the second material having relatively higher thermal conductivity. By this means it is possible to reduce and optimise the amount of the second material needed for accomplishing sufficient heat transfer from the drive device to the ambient atmosphere. The rest of the second structural part may be formed of the material, which has a lower thermal conductivity. The second structural part may then be formed such that only the portion with lower thermal conductivity, is in contact with other structural parts of the manipulator. Thereby the heat transfer from the drive device, via the second structural part to adjacent structural parts is limited. This may be accomplished e.g. by forming the second structural part such that the portion with lower thermal conductivity surrounds the portion with higher thermal conductivity.

A robot part to which one or several drive devices are mounted may be formed of a single second structural part. Alternatively, such a robot part may be formed of several structural parts. In this case at least one of these structural parts is a second structural part comprising the second material, to which the drive device is mounted. The other structural parts of this robot part may be either first or second structural parts. In this way great freedom of design of the different robot parts is given at the same time as satisfactory heat dissipation is achieved.

The structural parts to which a drive device is mounted may comprise surface enlarging means for further enhancing heat dissipation into the ambient atmosphere. The surface enlarging means may be constituted as integral flanges or fins that are formed together with the rest of the structural part in a casting operation.

The first material which forms the majority of the manipulator's structural parts may be formed of low-cost steel, just as in known manipulators manufactured and sold in large quantities. However, also other materials such as polymer materials, e.g. fibre-reinforced polymers and composite materials may be used as the first material having a relatively low thermal conductivity. The second material comprised in or forming the structural parts to which the drive device is mounted is formed of a material having comparatively high heat conductivity. Examples of such materials may be found among metals such as copper, alloys of metals and composite materials comprising polymer materials. Advantageously the second material is aluminium, which has a high thermal conductivity, is easy to from and machine as well as comparatively inexpensive.

One or several drive devices may advantageously be mounted to a structural part, which constitutes or forms a part of the foot, the stand or the lower arm of the manipulator. These members are comparatively large and their structural parts provide, already without any special adaptation of their normal form, a large surface in contact with the ambient air.

One or several rectifiers for supplying a voltage to the drive devices may be placed in a separate cabinet. If a common rectifier is used or all drive devices it suffices to arrange one common power supply cable between the cabinet and the manipulator. Several rectifiers may however be mounted to the manipulator, in which case the manipulator may be directly connected to a three phase ac power supply network. This arrangement is especially advantageous if several co-operating manipulators are arranged in a working group. It then suffices to connect each manipulator in the group only to a common control computer or the like and directly to an electrical mains cable. One or several rectifiers may further be mounted to a respective or a common second structural part of the manipulator, i.e. to a structural part, which is formed of or comprises a material with higher thermal conductivity. By this means also the heat generated by the rectifier may be readily dissipated into the ambient atmosphere.

For some applications it might further be possible and advantageous to mount at least one drive device and possibly one or several rectifiers on the inside of the foot. By this means the drive devices and the rectifiers are well protected. The heat is then transferred through the foot to its outside surface, where it is dissipated into the ambient air. The comparatively large outer surface of the foot may provide sufficient cooling for the drive device and the rectifier. However, if additional cooling would be required, additional cooling means such as air ducts and a fan could be provided for providing forced ventilation inside the foot.

According to a further embodiment a rectifier, which is common for all drive devices is mounted to the manipulator. The rectifier may be mounted to a second structural part formed of or comprising the material having a higher thermal conductivity. In this way also the heat generated by the common rectifier may be readily dissipated into the ambient atmosphere.

The invention also relates to an advantageous method of manufacturing such an industrial robot as set out in independent claim 13.

It is understood that the invention is not limited to these embodiments and that the invention may be varied within the scope of the accompanying claims. For example, the invention may be applied to arm type robots with any numbers of degrees of freedom as well as other types of robots, such as gantry robots or robots of the parallel kinematic type. It is also realized that the embodiments described herein or features and the details thereof may be combined in many different ways.

Further objects and advantages of the invention are apparent from the following description and the dependent claims.

### Brief description of the drawings

By way of example, the invention will now be described in greater detail with reference to the accompanying drawings in which:
Fig.1 is a schematic perspective view of a manipulator comprised in an industrial robot according to a first embodiment of the invention.
Fig. 2 is a schematic cross section in enlarged scale of a detail of the manipulator shown in fig. 1.
Fig. 3 is a schematic cross section corresponding to fig. 2 showing the corresponding detail at a second embodiment of the invention.
Fig. 4 is a schematic perspective view corresponding to fig. 1 showing a manipulator of a robot according to a third embodiment of the invention.
Fig. 5 is a schematic cross section corresponding to fig. 2 showing the corresponding detail at a fourth embodiment of the invention.
Fig. 6 is a schematic cross section of a part of a detail at a fifth embodiment of the invention.

### Description of preferred embodiments

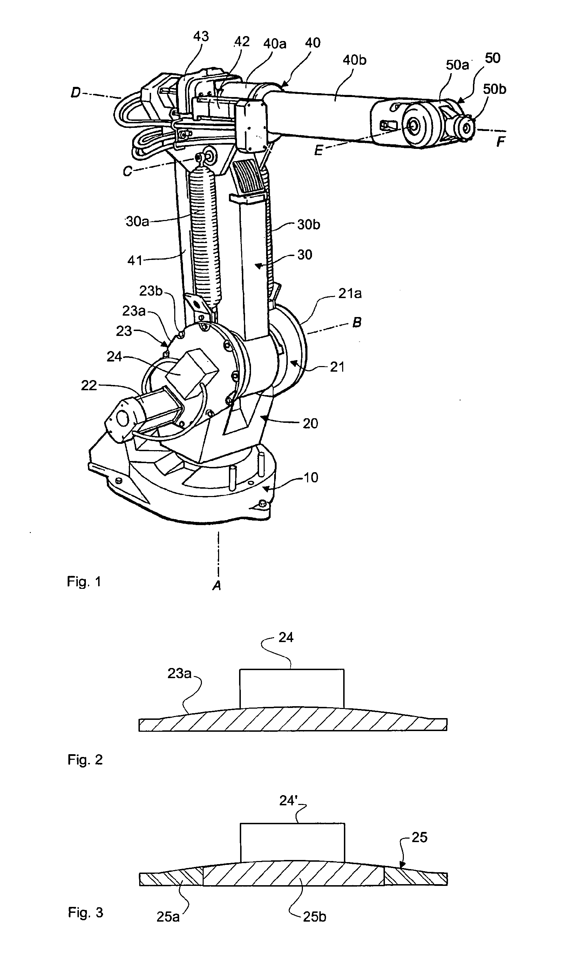

Figure 1 shows a manipulator of an industrial robot according to a first embodiment of the invention. The exemplifying industrial robot is an arm type robot with six degrees of freedom. The manipulator comprises a number of robot parts that are movable one in relation to the other. These robot parts comprise a foot 10, a stand 20, a lower arm 30, an upper arm 40 and a hand 50. The foot 10 is fixed to a mounting base (not shown) and is not per se movable in relation to the surrounding ground. The stand 20 is rotably journalled about a vertical axis A in relation to the foot 10. The lower arm 30 is pivotally journalled in the stand about an axis B and is balanced by two equalizer springs 30a and 30b, which are articulately fixed between the stand 20 and the upper end of the first arm 30. At the upper end of the first arm 30, a second robot arm 40 is pivotally journalled about an axis C. The pivoting of the arm 40 is performed over a parallel link 41. The second robot arm 40 comprises a rear part 40a, which is rotatable about the axis C, and a tubular front part 40b which is journalled in the rear part 40a and rotatable around the longitudinal axis D of the second arm 40. The outer end portion of the front arm part 40b consists of a hand or wrist 50 which comprises a wrist part 50a, rotatable about an axis E, and a tool attachment in the form of a disc 50b which is rotatable about the longitudinal axis F of the wrist part 50a.

Each of the robot parts 10-50 is formed of a single or a number of structural parts. Each of the structural parts is formed by a single material, e.g. by casting.

For movement of the stand 20, a drive means (not shown) comprising a motor and a gear is arranged on the stand 20. The movement of the lower arm 30 is accomplished by means of a motor (not shown), which is arranged in a gear box 21 which forms part of the stand 20. The gear box 21 is covered by a lid or cover 21a which forms a structural part of the stand 20 and which is attached to the gear box by means of threaded bolts. The lower end of the parallel link 41 is connected to a drive means, which comprises a motor 22 and a gear, which gear is arranged in a gear box 23, which also forms part of the stand 20. Also this gear box 23 is covered by a cover 23a, which is attached to the gear box 23 by means of threaded bolts 23b.

Drive means are also arranged on the rear part 40a of the upper arm for movement of the front part 40b of the upper arm 40, the wrist part 50a and the disc 50b. Each drive means comprises a motor and a reduction gear. In the figure only the motor 42 and the gear 43 for rotating the front part 40b of the upper arm 40 are indicated.

As shown in figure 1, a drive device 24 for controlling and supplying a variable altering current to the motor 22 is mounted on the gearbox cover 23a. Correspondingly a second drive device (not shown) is mounted on the opposite gear box cover 21a and connected to the motor arranged in the gear box 21. Additionally a third drive device (not shown) is mounted to another structural part of the stand and connected to the motor arranged for moving the stand.

Fig. 2 shows a schematic cross section in enlarged scale of the gearbox cover 23a and the drive device 24 of the manipulator shown in fig. 1. As can be seen in fig. 2 the entire cover 23a is formed of one and the same material. Even though it is not explicitly illustrated in the figures the same applies to the gear box cover 21a and the structural part of the stand 20, to which part the third drive device is mounted. These parts are all entirely formed of a material which is different from the material forming the other structural parts of the manipulator. In the embodiment shown in figs. 1 and 2 the gearbox covers 23a, 21a and the structural part to which the third drive device is mounted are formed of aluminium, whereas the other structural parts of the manipulator are formed of low-cost steel. These drive devices are further mounted to the respective structural part in a manner which promotes heat transfer by conduction between the drive devices and the respective structural part. This is accomplished e.g. by arranging a large metal to metal contact surface between the drive device and the structural part. The heat generated by the drive devices is transferred into the respective structural part. Due to the high thermal conductivity of these structural parts and their comparatively large surface area being in contact with the surrounding air, the heat generated by the drive devices is readily dissipated into the air.

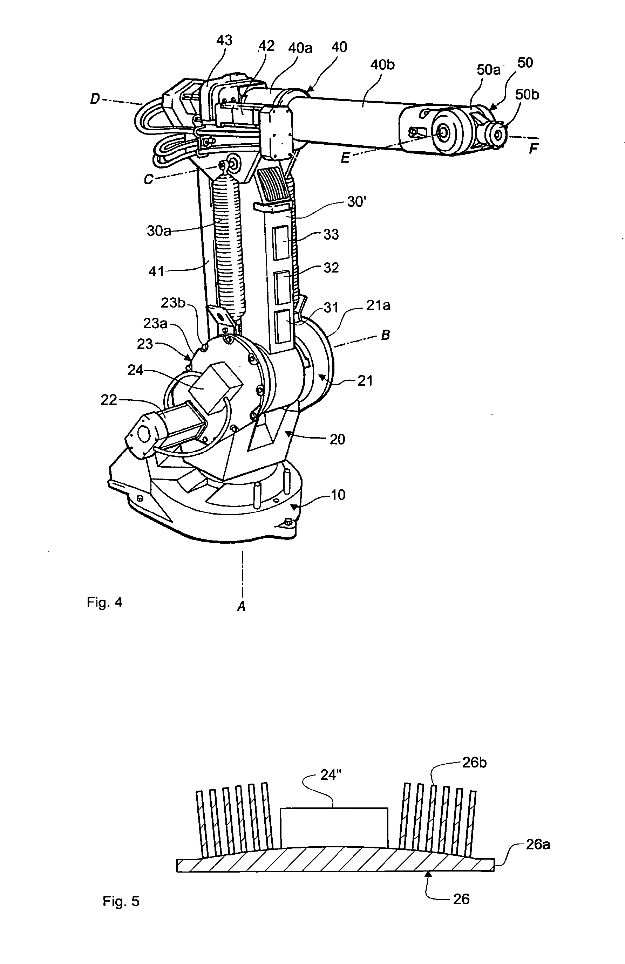

Fig. 3 illustrates an alternative way of forming the structural parts to which a drive device is mounted. In fig. 3 this alternative is exemplified by a gear box cover 25 which is formed of two different concentric portions 25a and 25b. The outer portion 25a is formed of a low-cost material, such as steel, having a relatively low thermal conductivity. The central portion 25b, to which a drive device 24' is mounted in a heat conducting manner, is formed of aluminium. The central portion 25b is made large enough to ensure that heat generated by the drive device 24' is dissipated into the surrounding atmosphere. In order to limit heat transfer from the drive device 24' to other structural parts of the manipulator, only the outer portion 25a is arranged in contact with adjacent structural parts of the manipulator. Therefore, means (nor shown) for attaching the gear box cover 25 to the gear box are arranged at the outer portion 25a of the cover 25.

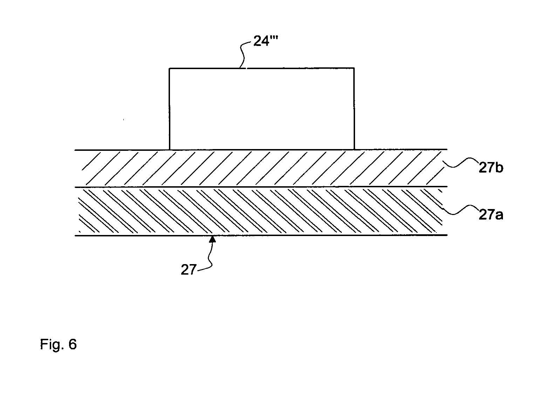

Fig. 6 illustrates a further alternative way of forming the structural parts to which a drive device is mounted. In fig. 6 a structural part 27 comprises a lower portion 27a formed of a material having a relatively low thermal conductivity, such as low-cost steel. The upper portion 27b to which a drive device 24 " ' is mounted in heat conductive contact, is formed of aluminium. The lower 27a and upper 27b portion may form an integral structural part. It is however also possible that the upper portion 27b is formed as a separate part, such as a comparatively thick aluminium plate. In such case the upper separate part 27b is attached to the lower portion 27a, e.g. by means of threaded bolts or an adhesive, which adhesive may be heat insulating.

The structural part 27, to which a drive device 24 " ' is mounted, may further, as described above with reference to figs. 1-3, constitute one of several structural parts which together form a robot part. It is however also possible that the structural part 27 supporting the drive device 24 " ' alone constitutes a robot part of the manipulator.

In the embodiment shown in fig. 1 only the drive devices connected to the motors for moving the stand 20, the lower arm 30 and the rear part 40a of the upper arm 40 are mounted to a structural part of aluminium. The other drive devices, which are driving the motors moving the robot parts 40b, 50a and 50b are all attached to the rear part 40a of the upper arm 40. Since these drive devices, due to the lower power required for moving these members, generate less heat, they may be mounted to structural parts which are formed of a material having a relatively low thermal conductivity.

However, according to the embodiment shown in fig. 4 also three drive devices 31, 32, 33 controlling the movements of the front part 40b of the upper arm 40, the wrist part 50a and the disc 50b are mounted on the lower arm 30' which is formed of a single structural part of aluminium. These drive devices 31, 32, 33 are connected to their respective motor by cables that are arranged along or inside the robot parts of the manipulator.

According to a further embodiment one or several of the second structural parts to which a drive device is mounted may be formed with fins, flanges or other surface enlarging means. Such a way of enhancing heat dissipation from a drive device to the ambient atmosphere is exemplified in fig. 5. In fig. 5 a gear box cover 26 which is entirely formed of aluminium is shown. The gear box cover 26 comprises a cover part 26a for the gear box and a number of fins 26b which are formed integrally with the cover part 25a, on its outside. A drive device 24" is mounted in heat conducting contact to the outside of the cover part 26. By this means heat dissipation from the drive device 24 " to the surrounding air is enhanced. Such fins or other surface enlarging means may be utilized especially if the heat generated by the drive device is great in relation to the surface area of the second structural part to which it is mounted. It is understood that also other second structural parts to which one or several drive devices are mounted may be arranged with fins or other surface enlarging means. These surface enraging means may be readily formed during manufacturing, such as by casting, of the respective structural part.

In all the embodiments it is possible to use a comparatively inexpensive material for most of the structural parts forming the movable members of the manipulator. By replacing only one or a few of the structural parts with parts formed of a material such as aluminium having a higher thermal conductivity, it is possible to arrange some or all of the drive devices on the manipulator. Placing the drive devices on the manipulator entails several advantages since the length of the microwave emitting and expensive multiconductor cables between the drive devices and the respective motor may be drastically shortened. Further, if all the drive devices and rectifiers are placed on the manipulator, the separate control cabinet and its cooling arrangement may be omitted. Especially if several manipulators are arranged to co-operate in a working group, such a simplified arrangement is advantageous since all the manipulators in the group then need to be connected only to a mains cable and to a common control unit such as a control computer. With a manipulator according to the invention these advantages may be achieved in a very simple and cost-efficient manner also for comparatively low-cost manipulators manufactured and sold in large quantities.

## Claims

1. An industrial robot, comprising a manipulator and control means for power supply and control of the manipulator, which manipulator comprises
- a number of robot parts (10, 20, 30, 40a, 40b, 50a, 50b) which are movable, one in relation to the other, and
- a plurality of drive means for moving said members, each drive means comprising at least one electric driving motor, and which control means comprises
- a plurality of drive devices for electrical supply and control of said driving motors,
**characterized in that**
- said number of robot parts comprise first structural parts comprising a first material and at least one second structural part (21a, 23a, 25, 26, 27, 30') comprising a second material,
- said second material has a higher thermal conductivity than said first material, and that
- at least one of said drive devices (24, 24', 24 " , 24"', 31, 32, 33) is mounted to said second structural part, in heat conductive contact with said second material of said second structural part.

2. The industrial robot according to claim 1, wherein said second structural part (21a, 23a, 26, 30') is entirely formed of said second material.

3. The industrial robot according to claim 1, wherein said second structural part (25, 27) is partially formed of said second material.

4. The industrial robot according to claim 3, wherein said second structural part (25) comprises a first portion (25a) which is formed of said first material and a second portion (25b) which is formed of said second material, and wherein said first portion is arranged to surround said second portion.

5. The industrial robot according to any of claim 1-4, wherein said second structural part (30') constitutes a robot part.

6. The industrial robot according to any of claim 1-4, wherein said second structural part (21a, 23a) constitutes one of a plurality of structural parts which together form a robot part (20).

7. The industrial robot according to any of claims 1-6, wherein said second structural part (26) comprises surface enlarging means, preferably fins (26b) or flanges, for enhancing heat dissipation into the ambient atmosphere.

8. The industrial robot according to any of claims 1-7, wherein the second material is aluminium.

9. The industrial robot according to any of claims 1-8 wherein a second structural part (21a, 23a, 25, 26) is comprised in or constitutes a foot (10) or a stand (20) of the manipulator.

10. The industrial robot according to any of claims 1-9, comprising means for providing forced ventilation of the inside of the foot and wherein said drive device is mounted to the inside of the foot.

11. The industrial robot according to any of claims 1-10, wherein a second structural (30') part is comprised in or constitutes a lower arm of the manipulator.

12. The industrial robot according to any of claims 1-11, wherein at least one rectifier is mounted to the manipulator.

13. The industrial robot according to claim 12, wherein the at least one rectifier is mounted to a second structural part of the manipulator.

14. The industrial robot according to any of claim 1-13, wherein the first material is steel.

15. Method of manufacturing an industrial robot, which robot comprises a manipulator and control means for power supply and control of the manipulator, which method comprises;
- forming a number of robot parts,
- providing a plurality of drive means, each drive means comprising at least one electric drive motor,
- assembling said robot parts and drive means into a manipulator of the industrial robot,
- providing a plurality of drive devices for electrical supply and control of said driving motors, **characterized by**
- providing a first material and second material, which second material has a higher thermal conductivity than said first material, and in that
- the step of forming a number of robot parts comprises forming first structural parts comprising said first material and at least one second structural part comprising said second material, and by
- mounting at least one of said drive devices to said second structural part, such that said at least one drive device is in heat conductive contact with said second material of said second structural part.
